# EUROPEAN PATENT APPLICATION

(11) **EP 2 116 735 A1**
(43) Date of publication of application: **11.11.2009**
(21) Application number: 07708256.8
(22) Date of filing: 08.02.2007
(51) Int. Cl.: F16D 28/00, F16D 13/52, F16D 48/02

(54) **CONTROL DEVICE FOR MULTIPLE DISK CLUTCH, AND TRANSFER DEVICE**

(71) Applicant: Univance Corporation, Kosai-city, Shizuoka 431-0494 (JP)
(72) Inventor: HIRAO, Kiyonori, Kosai-shi Shizuoka 431-0494 (JP); SUGIYAMA, Shingo, Kosai-shi Shizuoka 431-0494 (JP); OONISHI, Yoshitaka, Kosai-shi Shizuoka 431-0494 (JP); SUZUKI, Satoru, Kosai-shi Shizuoka 431-0494 (JP)
(74) Representative: Gill, David Alan
(86) International application number: PCT/JP2007/052272
(87) International publication number: WO 2008/096438

(57) **Abstract**

**PROBLEM**

To provide a controller for a multiple disc clutch, and a transfer case each of which is capable of suppressing that a transmission torque of the multiple disc clutch shifts from expected one due to errors, and temperature changes in parts.

**SOLVING MEANS**

Including a multiple disc clutch 150 having a plurality of clutch plates 151, 152; a movement member 160 for contacting the multiple disc clutch 150 to adjust a connection force of the multiple disc clutch 150, the movement member 160 being movable in an arrangement direction of the plurality of clutch plates 151, 152; a motor 181 for moving the movement member 160 in the arrangement direction; a transmission mechanism 170 which transmits a driving force of the motor 181 to the movement member 160 and has a second cam plate 173 being subjected to a force in an arrangement direction in a phase of connection of the multiple disc clutch 150, and; a load detecting portion 190 for detecting the load exerted on the second cam plate 173; and an ECU for controlling the motor 181 in accordance with the load detected in the load detecting portion 190.

## Description

### TECHNICAL FIELD

The present invention relates to a controller for multiple disc clutch, and a transfer case.

### BACKGROUND ART

Heretofore, a motive power-transmitting mechanism for distributing a driving force of an engine to front wheels and rear wheels has been utilized in four-wheel drive vehicles. A motive power-transmitting mechanism including an input shaft to which a driving force of an engine is transmitted through a thransmission or the like, a first output shaft for transmitting the driving force to rear wheels, and a second shaft for transmitting the driving force to front wheels, and also including a multiple disc clutch for adjusting a torque distribution between the first output shaft and the second output shaft is known as this sort of one (for example, refer to Patent literary document 1).

In a motive power-transmitting mechanism described in Patent literary document 1, a connection force of a multiple disc clutch is adjusted by a press plate which moves in an axial direction of a first output shaft. The press plate is driven by a motor through a conversion mechanism for converting a rotation displacement into an axial displacement. In this motive power-transmitting mechanism, a sensor for the rotation displacement is provided in an output shaft of the motor, and a target position for the sensor is obtained from a torque to be transmitted by the multiple disc clutch in accordance with a characteristic curve which is previously determined from the elasticity of the conversion mechanism and the multiple disc clutch. Also, the motor is controlled in accordance with the resulting target position.

Patent literary document **1**: Publication of the Translation of International Patent Application No. **2005-527741**

### DISCLOSURE OF THE INVENTION

### PROBLEM TO BE SOLVED BY THE INVENTION

However, in the motive power-transmitting mechanism described in Patent literary document **1**, the elasticity of the conversion mechanism and the multiple disc clutch relatively, largely disperses due to size errors and assembly errors of the parts constituting the conversion mechanism, the parts disposed around the multiple disc clutch, and the like, and expansion, contraction and the like thereof due to the temperature changes. As a result, there is encountered such a problem that the predetermined characteristic curve shifts from the actual characteristic curve, and the torque transmitted to the second shaft shifts from expected one.

In addition, the torque transmitted to the second shaft shifts to become larger than the expected the loads applied to the respective pails increase. As a result, there is also caused such a that to give each of the parts the sufficient strength and durability occurs in order to cope with this situation, and thus the parts become large in their sizes to increase their weights, thereby the manufacturing cost.

In order to solve these problems, it is expected that the precisions of the parts increase, thereby reducing the shift of the characteristic curve. However, it is difficult to increase the precisions of all the constituent parts. Also, even when this is achieved, the manufacturing cost increases accordingly. In addition, it is also expected that after completion of the assembly of the parts, the characteristic curve inherent in the assembled conversion mechanism and multiple disc clutch is measured. However, such a control system becomes complicated, and thus the manufacturing cost increases.

The present invention has been made in the light of the above-mentioned circumstances, and it is therefore an object of the present invention to provide a controller and a transfer case for a multiple disc clutch, and a transfer each of which is capable of suppressing that a transmission torque of the multiple disc clutch shifts from expected one due to errors, and temperature changes in parts.

### MEANS FOR SOLVING PROBLEM

In order to attain the above-mentioned object, there is provided a controller for a multiple disc clutch, including:
a multiple disc clutch having a plurality of clutch plates;
a movement for the multiple disc clutch to adjust a connection force of the multiple disc clutch, the movement member being movable in an arrangement direction of the plurality of clutch plates;
a driving for the movement member in the arrangement direction;
a transmission portion which transmits a driving force of the driving portion to the movement member, is subjected to a force in the arrangement direction in a phase of connection of the multiple disc clutch, and has a loaded member being subjected to a load linear with respect to the connection force of the multiple disc clutch in a predetermined direction;
a load detecting portion for detecting the load exerted on the loaded member in the predetermined direction; and
a control portion for controlling the driving portion in accordance with the load detected in the load detecting portion.

In addition, in order to attain the above-mentioned object, there is provided a controller for a multiple disc clutch, including:
a multiple disc clutch having a plurality of clutch plates;
a movement member for contacting the multiple disc clutch to adjust a connection force of the multiple disc clutch, the movement member being movable in an arrangement direction of the plurality of clutch plates, the movement member being movable to a position where the movement member is separated apart from the multiple disc clutch;
a driving portion for moving the movement member in the arrangement direction;
a transmission portion which transmits a driving force of the driving portion to the movement member, is subjected to a force in the arrangement direction in a phase of connection of the multiple disc clutch, and has a loaded member being subjected to a load linear with respect to the connection force of the multiple disc clutch in a predetermined direction;
a displacement detecting portion for detecting a displacement of a link member, the link member being moved by driving of the driving portion;
a load detecting for detecting a load exerted on the on which a load is to be exerted in a predetermined direction; and
a control portion for controlling the driving portion in accordance with the load detected in the load detecting portion with respect to a position where the movement member contacts the multiple disc clutch, and controlling the driving portion in accordance with the displacement detected in the displacement detecting portion with respect to a position where the movement member is separated apart from the multiple disc clutch.

Also, in order to attain the above-mentioned object, there is provided a transfer case, including:
an input shaft;
a first output shaft and a second shaft, a motive power of the input shaft being transmitted to each of the first output shaft and the second shaft; and
a controller, for the above-mentioned multiple disc clutch, for controlling a distribution of the motive power transmitted from the first input shaft to each of the first output shaft and the second output shaft.

### EFFECTS OF THE INVENTION

According to the present invention it is possible to suppress that a transmission torque of the multiple disc clutch from expected one due to errors and temperature changes in parts.

### BRIEF DESCRIPTION OF THE DRAWINGS

**[****FIG. 1****]** A schematic explanatory view of a four-wheel drive vehicle showing a first embodiment of the present invention.
**[****FIG. 2****]** A schematic cross sectional view of a transfer case.
**[****FIG. 3****]** A partially enlarged cross sectional view of the transfer case.
**[****FIG. 4****]** A schematic explanatory front view of a first cam plate and a second cam plate, and parts relating thereto.
**[****FIG. 5****]** An enlarged view of the vicinities of grooves of the first cam plate and the second cam plate.
**[****FIG. 6A****]** An explanatory cross sectional view of a load detecting portion.
**[****FIG. 6B****]** A graph showing a relationship between a connection force of a multiple disc clutch, and a load on the first cam plate and detected in the load detecting portion. **[****FIG. 7****]** An explanatory view showing a state in which the first cam plate moves to the other circumferential side most to abut against a regulated member which is not shown.
**[****FIG. 8****]** An explanatory view showing a position of the first cam plate in a state in which a movement member contacts the multiple disc clutch without generating a connection force in the multiple disc clutch.
**[****FIG. 9****]** An explanatory view showing a state in which the first cam plate moves to one circumferential side most.
**[****FIG. 10****]** A graphical representation showing a relationship between a rotation displacement of an output shaft of a motor, and a load detected in the load detecting portion.
**[****FIG. 11****]** A schematic block diagram of an ECU of the transfer case.
**[****FIG. 12A****]** A graphical representation showing a relationship between a pulse count in a purse sensor of the and the load in the load detecting portion.
**[FIG. 12B]** A graphical representation showing a relationship between the pulse count in the pulse sensor of the motor, and a false signal generated in a feedback signal-generating portion. **[****FIG. 12C****]** A graphical representation showing a relationship between the pulse count in the pulse sensor of the motor, and a load represented by a feedback signal outputted the feedback signal-generating portion.
**[****FIG. 13****]** A flow chart showing control for the transfer case made by the ECU.
**[****FIG. 14****]** An explanatory cross sectional view, of a load detecting portion of a change of the first embodiment, showing a state in which positions of a piston and a rod shift due to a temperature change.
**[****FIG. 15****]** A graphical representation showing the change of the first embodiment, showing a state in which a reference position of the pulse sensor is proofread in accordance with a temperature change, and showing a relationship between the pulse count in the pulse sensor of the motor, and the detected load.
**[****FIG. 16****]** A graphical representation showing a second embodiment of the present invention, and showing a relationship between a rotation displacement of an output shaft of a motor, and a load detected in a load detecting portion in a transfer case installed in a vehicle in which two modes having a 4WD auto mode and a 4WD lock mode can be switched over to each other.
**[****FIG. 17****]** A schematic block diagram of an ECU of the transfer case.
**[****FIG. 18****]** A partial explanatory cross sectional view, of a transfer case, showing a third embodiment of the present invention.
**[****FIG. 19****]** A front view of a lever member.
**[****FIG. 20****]** A schematic explanatory front view, of a first cam plate and a second cam plate, and parts relating thereto, showing a fourth embodiment of the present invention, and showing a positional relationship among the parts in a multiple disc clearance region.
**[****FIG. 21****]** A schematic explanatory front view, of the first cam plate and the second cam plate, and the parts relating thereto, showing a positional relationship the parts in a torque control region.
**[****FIG. 22****]** A graphical representation in which its upper side is a graphical representation showing a relationship between a rotation displacement of the first cam plate, and a load detected in a load detecting portion, and its lower side is a graphical representation showing a relationship between the rotation displacement of the first cam plate, and a rotation displacement of an output shaft of a motor.

### DESCRIPTION OF REFERENCE NUMERALS

- **1**: automobile vehicle
- **2**: engine
- **3**: transmission
- **4**: center drive shaft
- **5**: transfer case
- **6**: front drive shaft
- **7**: rear drive shaft
- **8**: front differential
- **9**: front wheel
- **10**: rear differential
- **11**: rear wheel
- **12**: ECU
- **13**: operation switch
- **14**: speed sensor
- **15**: acceleration sensor
- **16**: front wheel rotation sensor
- **17**: rear wheel rotation sensor
- **18**: throttle sensor
- **19**: engine revolution sensor
- **20**: steering angle sensor
- **100**: case
- **110**: input shaft
- **111**: ball bearing
- **120**: output shaft for rear wheels
- **121**: ball bearing
- **122**: sprocket
- **130**: output shaft for front wheels
- **131**: ball bearing
- **132**: sprocket
- **140**: chain
- **150**: multiple disc clutch
- **151**: driving plate
- **152**: driven plate
- **153**: clutch hub
- **154**: clutch drum
- **155**: return spring
- **160**: movement member
- **170**: transmission mechanism
- **171**: pinion gear
- **172**: first cam plate
- **172a**: ring portion
- **172b**: driven portion
- **172c**: thrust needle bearing
- **172d**: groove portion
- **173**: second cam plate
- **173a**: ring portion
- **173b**: regulated portion
- **173c**: thrust needle bearing
- **173d**: groove portion
- **174**: ball
- **180**: actuator
- **181**: motor
- **181**: output shaft
- **182**: reduction gear set
- **182a**: output shaft
- **183**: bracket
- **184**: pulse sensor
- **190**: load detecting portion
- **191**: cylinder
- **192**: piston
- **193**: rod
- **194**: pressure sensor
- **195**: seal member
- **201**: mode inputting portion
- **202**: vehicle state-inputting portion
- **203**: torque determining portion
- **204**: load arithmetically operating portion
- **205**: current arithmetically operating portion
- **206**: current outputting portion
- **207**: memory portion
- **208**: load inputting portion
- **209**: displacement inputting portion
- **210**: feedback signal-generating portion
- **211**: load proofreading portion
- **371**: lever member
- **371a**: insertion hole
- **371b**: protrusion portion
- **371**: reception hole
- **372**: thrust needle bearing
- **380**: linear actuator
- **381**: rod
- **390**: load sensor
- **391**: rod
- **470**: transmission mechanism
- **471**: cam member
- **472e**: cam follower

### BEST MODE FOR CARRYING OUT THE INVENTION

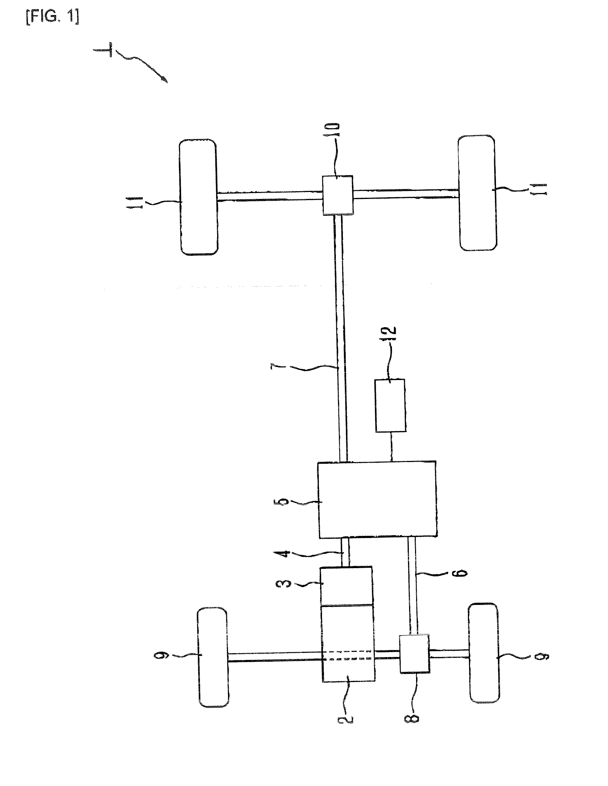

**FIG. 1** is a schematic explanatory view of a four- wheel drive vehicle showing a first embodiment of the present invention.

As shown in **FIG. 1****,** the automobile **1** includes an engine **2** serving as a prime bar, a transmission **3** for performing a gear change operation, a center drive shaft **4** to which a driving force of the engine **2** is transmitted through the transmission **3**, a transfer case **5** which serves as a motive power-transmitting device and to which a driving force of the center drive shaft **4** is inputted, and a front drive shaft **6** and a rear drive shaft **7** to which a driving force of the center drive shaft **4** is outputted from the transfer case **5** at a predetermined distribution ratio. A driving force of the front drive shaft **6** is transmitted to a pair of left and right front wheels **9** through a front differential **8**. A driving force of the rear drive shaft 7 is transmitted to a pair of left and right rear wheels **11** through a rear differential **10.**

The ratio at which the driving force is distributed between the front drive shaft **6** and the rear drive shaft **7** in the transfer case **5** is determined by an electronic control unit (ECU) **12.** The ECU **12** performs control for the transfer case **5** in accordance with a mode data on which is inputted through a manipulation switch **13** manipulated by a crew of the automobile vehicle **1**. In this embodiment, any one of three modes having a **2**WD mode, a **4**WD auto mode, and a **4**WD lock mode can be selected. When the **2**WD mode is selected by manipulating the manipulation switch **13**, the ECU **12** controls the transfer case **5** so that all the driving forces are transmitted to the rear drive shaft **7**, while none of the driving forces are transmitted to the front drive shaft **6**. In addition, when the **4**WD lock mode is selected by manipulating the manipulation switch **13**, the ECU **12** controls the transfer case **5** so that the driving force is transmitted at the distribution ratio or **50:50** to the front drive shaft **6** and the rear drive shaft 7.

In the ECU **12** is connected to a speed Sensor **14** for detecting a speed of the an acceleration sensor **15** for detecting a transverse acceleration of the vehicle, a front wheel rotation sensor **16** and a rear wheel rotation sensor **17** for detecting the numbers of rotations of each of the front wheels **9** and each of the rear wheels **11**, respectively, a throttle sensor **18** for detecting the degree of opening of a throttle in the engine **2**, an engine revolution sensor **19** for detecting the number of revolutions of the engine **2**, a rudder angle sensor **20** for detecting a rudder angle of a steering, and the like. Also, when the **4**WD auto mode is selected by manipulating the manipulation switch **13**, the ECU **12** adjusts a distribution at which the driving force transmitted to the drive shafts **6** and **7** in correspondence to states of the vehicle such as the speed of the vehicle, the transverse acceleration, the rotation ratio between the front and the rear wheels, the degree of opening of the throttle, and the number of revolutions of the engine.

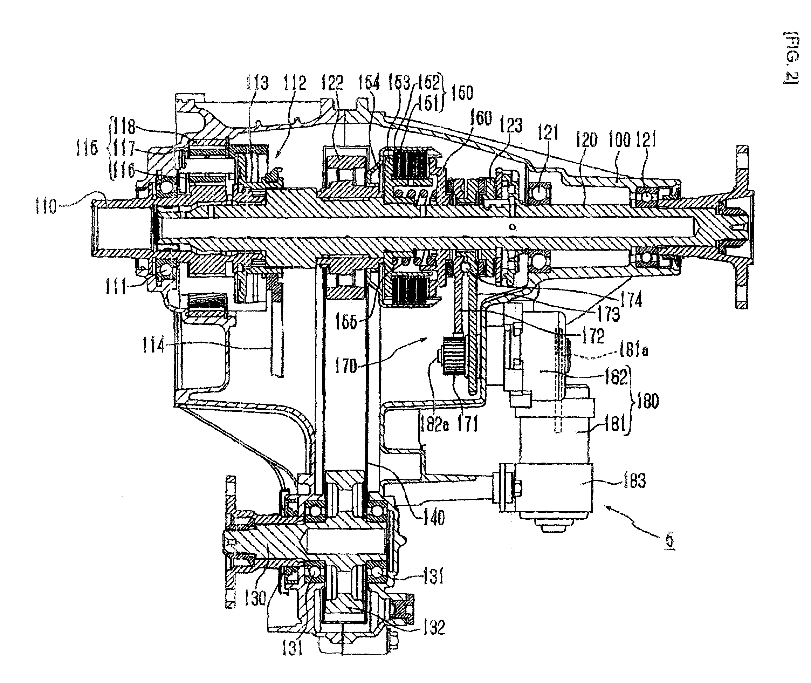

**FIG. 2** is a schematic cross sectional view of the transfer case.
As shown in **FIG. 2**, the transfer case **5** includes an input shaft **110** which rotates together with the center drive shaft **4**, an output shaft **120** for rear wheels which serves as a first output shaft and which is connected to the rear drive shaft **7**, and an output shaft **130** for front wheels which serves as a second output shaft and which is connected to the front drive shaft **6**. The input shaft **110,** the output shaft **120** for rear wheels, and the output shaft **130** for front wheels are supported by ball bearings **111, 121** and **131,** respectively, so as to be rotatable with respect to a case **100**.

A driving force of the input shaft **110** is transmitted to the output shaft **120** for rear wheels through a reduction gear **112**. The reduction gear **112** has a slide gear **113** with which the driving force transmitted to the output shaft **120** for rear is switched in two steps for a low speed and a high speed, and a switching fork **114** which moves the slide gear **113** and which is driven by a motor (not shown). Here, a part of the fork **114** is omitted together with the or the like in its illustration form the reason of avoiding the complicated figure. The reduction gear **112** has a planetary gear mechanism **115** for reducing the driving force off the input shaft **110,** and transmitting the resulting driving force to the output shaft **120** for rear wheels. The planetary gear mechanism **115** has a sun gear **116** which is formed in the input shaft **110,** a pinion gear **117** which meshes with the sun gear **116,** a ring gear **118** which meshes with the pinion gear **117** and which is disposed concentrically with the sun gear **116**, a carrier which supports the pinion gear **117**. The slide gear **113** is constructed so that it is normally engaged with the output shaft **120** for rear wheels, and is selectively engaged with either the input shaft **110** or the carrier.

The input shaft **110** and the output shaft **120** for rear wheels are coaxially disposed in a line on a front side and a rear side, respectively. A sprocket **122** which is rotatable with respect to the output shaft **120** for rear wheels, and a regulation member **123** which is disposed at a distance from the sprocket **122** are radially provided outside the output shaft **120** for rear wheels. In addition, a sprocket **132** is fixedly fastened to an outer periphery of the output shaft **130** for front wheels. A chain **140** is wound around each of the sprockets **122** and **132.** Thus, when the driving force is transmitted from the output shaft **120** for rear wheels to the sprocket **122,** the output shaft **130** for front wheels is driven through the chain **140.**

In addition, the transfer case **5** includes a multiple disc clutch **150** through which the output shaft **120** for rear wheels and the output shaft **130** for front wheels are dynamically connected to each other, and a movement member **160** for performing depressing and release of the multiple disc clutch **150**. The multiple disc clutch **150** has driving plates **151** and driven plates **152** which serve as a plurality of clutch plates and which perform transmission of a driving torque by the mutual surface contact between them. Each of the driving plates **151** its supported by a clutch hub **153** so as to be axially movable, and each of the driven plates **152** is supported by a clutch drum **154** so as to be axially movable. The clutch hub **153** is fixedly fastened to an outer peripheral surface of the output shaft **120** for rear wheels, and the clutch drum **154** is fixedly fastened to an axial rear side of the sprocket **122.**

The movement member **160** is installed on a side axially opposite to the sprocket **122** of the multiple disc clutch **150**, and thus is movable in an arrangement direction of the driving plates **151** and the driven plates **152**. The movement member **160** adjusts a fastening force for the multiple disc clutch **150** by depressing the multiple disc clutch **150**. In this embodiment, the arrangement direction of the driving plates **151** and the driven plates **152** agrees with an axial direction of the output shaft **120** for rear wheels. The movement member **160** is moved through a transmission mechanism **170** for converting a rotary motion into an axial motion by driving of an actuator **180**. In addition, the movement member **160** is backward biased by a return spring **155** provided between the clutch hub **153** and the movement member **160**.

The transmission mechanism **170** transmits the driving force of the actuator **180** to the movement member **160**. The actuator **180** includes a motor **181** having an output shaft **181a,** and a reduction gear set **182** for reducing an output of the motor **181**. The motor **181** is fixedly fastened to the case **100** through a bracken **183**. The transmission mechanism **170** has a pinion gear **171** which is connected to an output shaft **182a** of the reduction gear set **182,** a first cam plate **172** which meshes with the pinion gear **171,** a second cam plate **173** is disposed so as to face the first cam plate **172,** and a ball **174** which is interposed between the first cam plate **172** and the second cam plate **173.** In this embodiment, the output shaft **182a** of the reduction gear set **182** constitutes an output shaft of the actuator **180.** In a phase of connection of the multiple disc clutch **150**, an axial force is applied to each of the first cam plate **172** and the second cam plate **173**.

The motor **181** of the actuator **180** is controlled in its current in accordance with a signal outputted from the ECU **12.** In addition, the reduction gear set **182** is constituted by a warm gear. The output shaft **181a** of the motor **181** and the output shaft **182a** of the reduction gear set **182** are held by cutting off a current being caused to flow through the motor **181.** Here, a high efficient gear may be used as the reduction gear set **182** instead of using the warm gear, and also a brake for holding a rotation position of the output shaft **181a** of the motor **181** may be used. The output shaft **181a** which serves as a link member and which is moved by driving of the motor **181** rotates the first cam plate **172** through the reduction gear set **182** and the pinion gear **171.** In addition, the motor **181** is provided with a pulse sensor **184** which serves as a displacement detecting portion and which detects a rotation displacement of the output shaft **181a.** Note that, in addition to the construction with which the displacement of the output shaft **181a** of the motor **181** is detected, a construction is also expected with which a displacement of the output shaft **182a** of the reduction gear set **182** is detected. The link member a displacement of which is detected by the displacement detecting portion may be a member constituting the actuator **180,** or may be a member constituting the transmission mechanism **170.** In brief, any of suitable members may be used as the link member as long as it moves in the phase of driving of the actuator **180.**

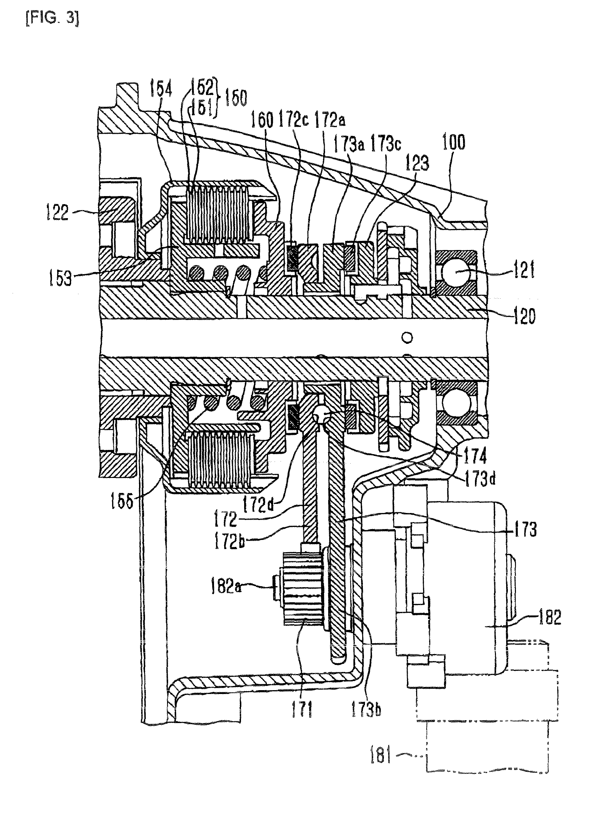

**FIG. 3** is a partially enlarged cross sectional view of the transfer case.
As shown in **FIG 3**, the first cam plate **172** has a ring portion **172a** which is rotatably mounted to the output shaft **120** for rear wheels, and a driven portion **172b** which radially extends outward from the ring portion **172a** to mesh with the pinion gear **171.** As shown in **FIG. 3****,** the first cam plate **172** as an intermediate member is provided between the second cam plate **173** and the movement member **160**. In this embodiment, the driving force of the actuator **180** is reduced and in this state is transmitted from the pinion gear **171** to the driven portion **172b.** In addition, the second cam plate **173** as a member on which a load is to be exerted has a ring member **173a** which is rotatably mounted to the output shaft **120** for rear wheels, and a regulated portion **173b** which radially extends outward from the ring portion **173a,** and which is regulated in one circumferential rotation thereof with a predetermined backlash and is regulated in the other circumferential rotation thereof by a stopper (not shown).

In addition, the ring portion **172a** of the first cam plate **172** has a thrust needle bearing **172c** as an abutment portion which is formed in a front surface and which abuts against the movement member **160,** and a groove portion **172d** which is formed in a rear surface and in which a front side of a ball **174** is accommodated. The ring member **172a** is provided so as to be rotatable and axially movable with respect to the output shaft **120** for rear wheels.

The ring portion **173a** of the second cam plate **173** has a thrust needle bearing **173a** as an abutment portion which is formed in a rear surface and which abuts against the regulation member **123,** and a groove portion **173d** which is formed in a front face and in which a rear side of the ball **174** is accommodated. That is to say, the ball **174** is held between the groove portions **172d** and **173d** of the first and second cam plates **172** and **173.** The ring portion **173a** is provided so as to be rotatable and axially movable with respect to the output shaft **120** for rear wheels, and its rotational movement is regulated with a predetermined backlash by a load detecting portion **190** and its axial movement is regulated by the regulation member **123**.

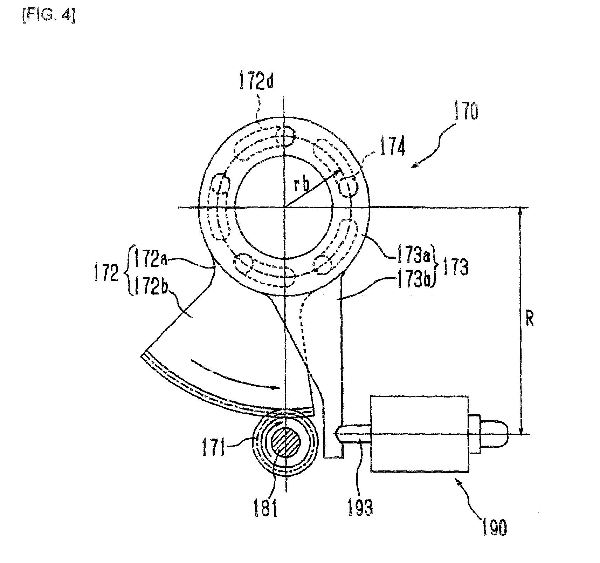

**FIG. 4** is a schematic explanatory front view of the first cam plate and the second cam plate, and parts relating thereto.
As shown in **FIG. 4****,** in this embodiment, the five grooves **172d**, the five grooves **173d,** and the five balls **174** are each circumferentially disposed at predetermined intervals. The grooves **172d** and the grooves **173d** are each formed at a distance rb from a center of the output shaft **120** for rear wheels so as to circumferentially extend by a predetermined section. Here, the number of grooves **172d,** the number of grooves **173d,** and the number of balls **174** can be suitably changed.

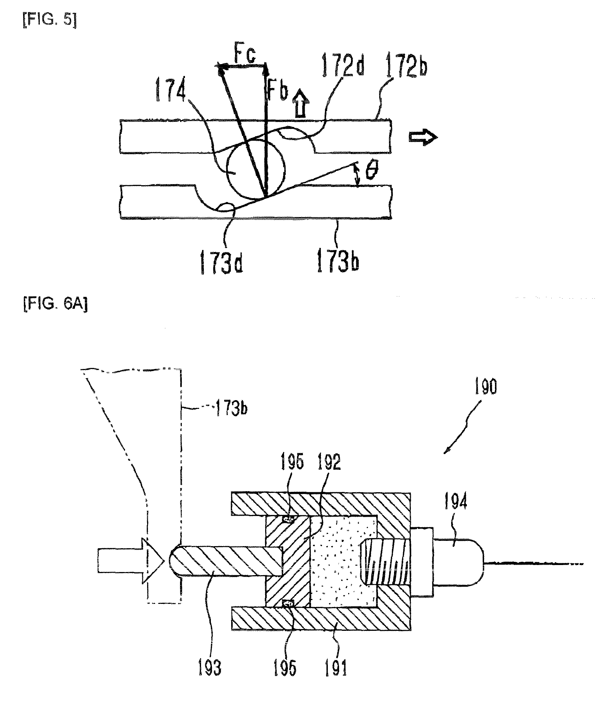

**FIG. 5** is an enlarged explanatory view of the vicinities of the grooves of the first cam plate and the second cam plate.
As shown in **FIG. 5**, each of the grooves **172d** is formed so as to deepen at a given rate in the other circumferential direction. In addition, each of the grooves **173d** is formed so as to deepen at a given rate in one circumferential direction. As a result, when the first cam plate **172** rotates in the one circumferential direction in a state in which the rotation of the second cam plate **173** in the one circumferential direction is regulated, the ball **174** rolls on the surface of the groove **172d** and the surface of the groove **173d** from the deeper portions to the shallower portions of the groove **172d** and the groove **173d,** so that the first cam plate **172** is separated apart from the second cam plate **173.** On the other hand, when the first cam plate **172** moves in the other circumferential direction, the ball **174** rolls on the surface of the groove **172** and the surface of the groove **173d** from the shallower portions to the deeper portions of the groove **172d** and the groove **173d,** so that the first cam plate **172** comes close to the second cam plate **173.** When the ball **174** is located in the middle of the grooves **172d** and **173d,** an axial reaction force Fb and a circumferential reaction force Fc proportional thereto are exerted on the second cam plate **173.** Consequently, the load detecting portion **190** detects a load which is linear with respect to the axial reaction force Fb.

The load detecting portion **190** detects a load which is exerted in the one circumferential direction on the second cam plate **173** in a position located at a distance R from the center of the output shaft **120** for rear wheels (refer to **FIG. 4**). That is to say, the load detecting portion **190** detects the load expressed by Fc×R/rb, and the load which is linear with respect to a connection force of the multiple disc clutch **150** is outputted from the second cam plate **173.** **FIG. 6A** is an explanatory cross sectional view of the load detecting portion. As shown in **FIG 6A**, the load detecting portion **190** has a cylinder **191** in which oil is filled as fluid, a piston **192** which can move inside the cylinder **191,** a rod **193** which is coupled to the piston **192,** and a seal member **195.** A head of the rod **193** abuts against the regulated portion **173**b of the second cam plate **173** with the connection force being generated in the multiple disc clutch **150.** Also, when one circumferential force is applied to the second cam plate **173** in a state in which the rod **193** abuts against the second cam plate **173,** the rod **193** moves within the cylinder **191,** so that an oil pressure within the cylinder **191** increases. That is to say, the cylinder **191,** the piston **192** and the rod **193** constitute a conversion mechanism for converting a load into an oil pressure. Also, the cylinder **191** is provided with a pressure sensor **194** for detecting an oil pressure, and converting the oil pressure into an electrical signal. The electrical signal outputted from the pressure sensor **194** is detected by the ECU **12.** Here, the load detecting portion **190** may use a load sensor for directly detecting a load without using the oil pressure. Thus, the construction with which a load is detected is arbitrarily made. The load sensor stated herein, for example, means one for outputting an electrical signal proportional to a load by using a strain gauge or the like.

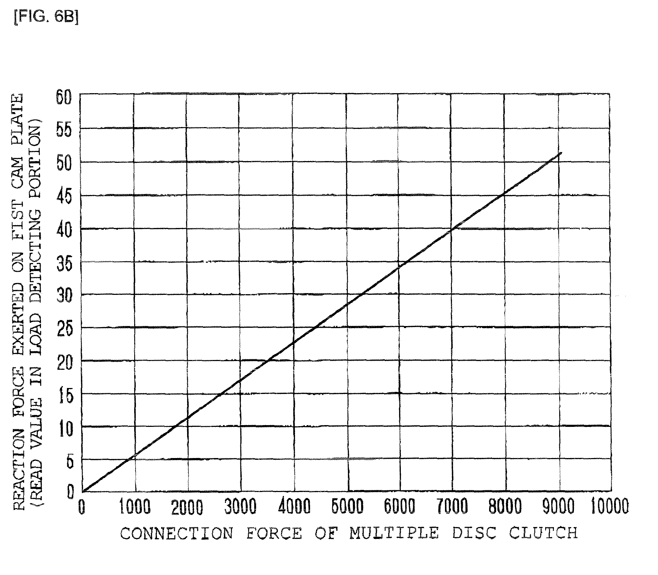

**FIG 6B** is a graph showing a relationship between the connection force of the multiple disc clutch, and the load which is exerted on the second cam plate and which is detected by the load detecting portion. As shown in **FIG. 6B**, the load which is linear with respect to the connection force of the multiple disc clutch **150** is exerted in the rotation direction on the second cam plate **173.**

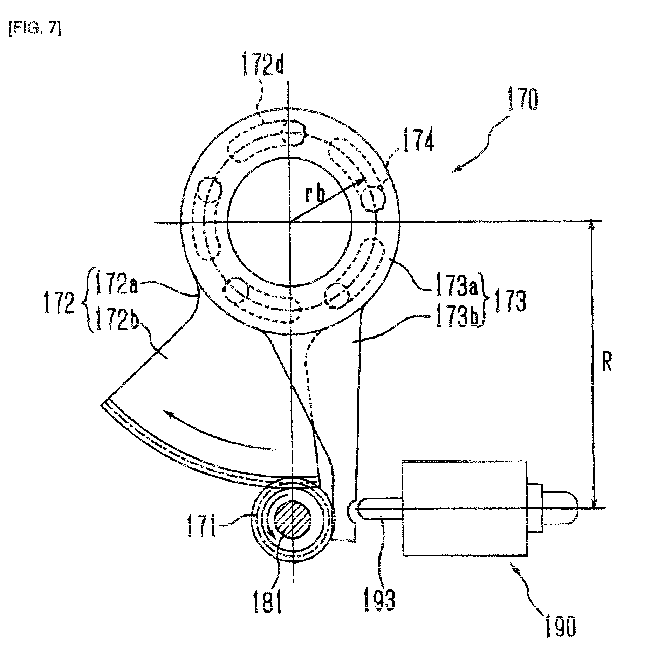

Here, states of the conversion mechanism, the movement member and the multiple disc clutch in the movable range of the first cam plate **172** will now be described with reference to **FIG. 4** and **FIGS. 7** to **9.** **FIG. 7** is an explanatory view showing a state in which the first cam plate moves to the other circumferential side most to abut against the regulated member (not shown).

As shown in **FIG. 7**, in the state in which the first cam plate **172** moves to the other circumferential side most, the movement member **160** and the first cam plate **172** are pressed against the second cam plate **173** side by an biasing force of the return spring **155**. At this time, no circumferential load is exerted on the second cam plate **172** because the second cam plate **172** is separated apart from the load detecting portion **190**.

When the first cam plate **172** moves in one circumferential direction from the state of **FIG. 7****,** as shown in **FIG. 4****,** the second cam plate **173** moves together with the first cam plate **172** in the one circumferential direction to contact the load detecting portion **190.**

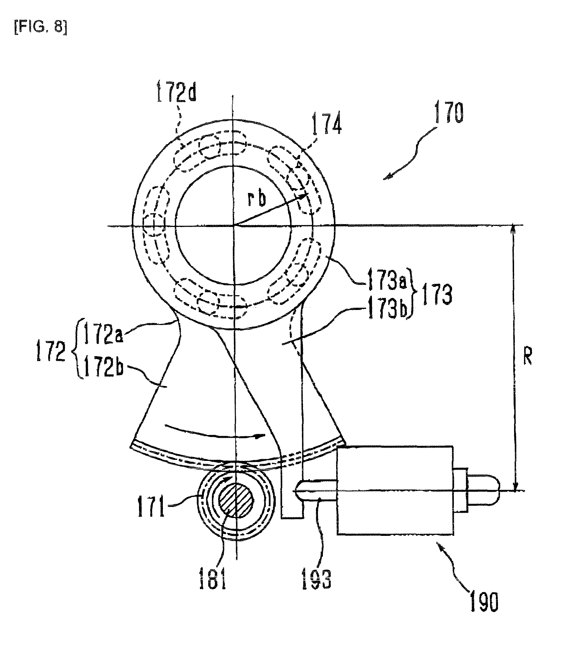

When the first cam plate **172** moves in the one circumferential direction from the state of **FIG. 4****,** the first cam plate **172** rotates relatively with respect to the second cam plate **173** since the movement of the second cam plate **173** is regulated by the load detecting portion **190.** At this time, since the first cam plate **172** is separated apart from the second cam plate **173,** the movement member **160** moves to a multiple disc clutch **150** side against the biasing force of the return spring **155,** and abuts against the multiple disc clutch **150** in a short time. **FIG. 8** shows a position of the first cam plate **172** in a state in which the movement member **160** contacts the multiple disc clutch **150** without generating the connection force in the multiple disc clutch **150.**

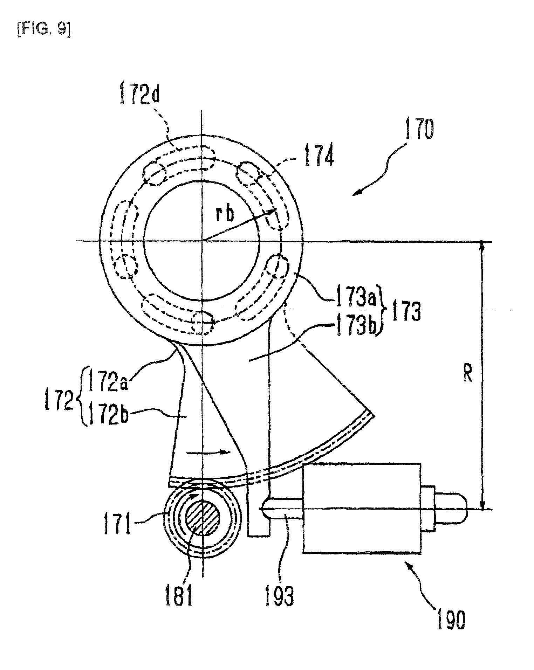

When the first cam plate **172** moves in the one circumferential direction from the state of **FIG. 8**, the movement member **160** moves in a direction of compressing each of the plates **151** and **152** of the multiple disc clutch **150** against an elastic force of the multiple disc clutch **150** as well as against the biasing force of the return spring **155.** Also, as shown in **FIG. 9**, the connection force of the multiple disc clutch **150** becomes maximum in a state in which the first cam plate **172** moves to the one circumferential direction side most.

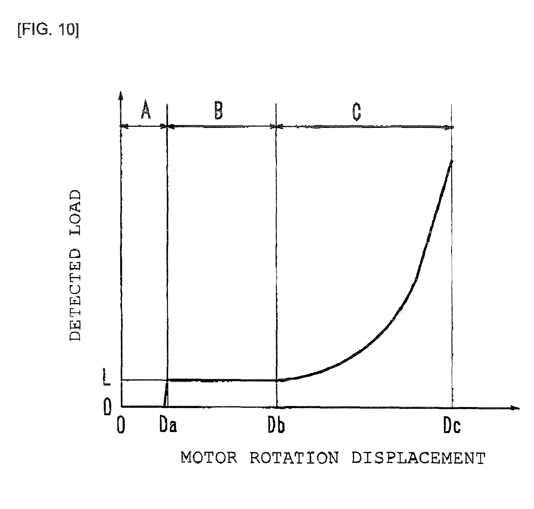

Next, a relationship between the rotation displacement of the output shaft **181a** of the motor **181** for driving the first cam plate **172,** and the load exerted on the second cam plate **173** and detected in the load detecting portion **190** will now be described with reference to **FIG. 10**. **FIG. 10** is a graphical representation showing a relationship between the rotation displacement of the output shaft of the motor, and the load detected in the load detecting portion. This graph illustrates each of the rotation displacement of the output shaft **181a** and load detected in the load detecting portion **190** as zero in the state in which the first cam plate **172** as shown in **FIG. 7** moves to the other circumferential direction most.

As shown in **FIG. 10****,** even when the rotation displacement of the output shaft **181a** increases, the load is held as zero until the second cam plate **173** comes to contact the load detecting portion **190** from a state in which the rotation displacement is zero. Here, a region in which the output shaft **181a** can be rotated without causing the second cam plate **173** to contact the load detecting portion **190** is referred to as a sensor clearance region A.

When the second cam plate **173** contacts the load detecting portion **190** as shown in **FIG. 4**, the load detected in the load detecting portion **190** abruptly increases due to the biasing force of the return spring **155.** In **FIG. 10****,** the rotation displacement at this time is indicated as Da. Also, even when the rotation displacement of the output shaft **181a** increases, the detected load hardly changes until the movement member **160** comes to contact the multiple disc clutch **150** as shown in **FIG 8**. Strictly speaking, the load slightly increases since the return spring **155** is compressed along with the movement of the movement member **160.** However, an increase in load is negligibly small as compared with that in load detected in the phase of connection of the multiple disc clutch **150.** Here, a region in which the output shaft **181a** can be rotated so as to move the movement member **160** without generating the connection force in the multiple disc clutch **150** is referred to as a multiple disc clearance region B. In addition, the load detected in the load detecting portion **190** at this time is indicated as a reference load L.

When the movement member **160** contacts the multiple disc clutch **150** as shown in **FIG. 8****,** the load detected in the load detecting portion **190** increases from the reference loan L due to the connection force of the multiple disc clutch **150.** In **FIG. 10****,** the rotation displacement at which the movement member **160** contacts the multiple disc clutch **150** is indicated as Db. When the connection force is generated in the multiple disc clutch **150,** the rotation displacement of the output shaft **181a** and the detected load do not show a proportional relationship owing to the elasticity of the multiple disc clutch **150,** the transmission mechanism **170** and the like. A region in which the connection force is generated in the multiple disc clutch **150** in such a manner is referred to as a torque control region C. In **FIG. 10****,** the rotation displacement at which the connection force of the multiple disc clutch **150** becomes maximum is indicated as Dc.

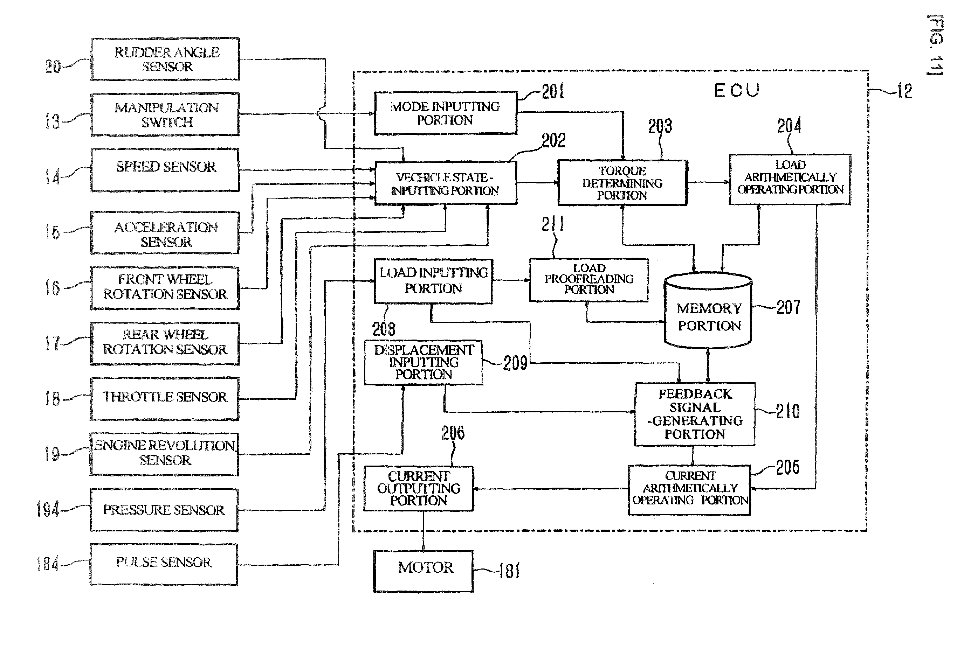

Subsequently, the ECU **12** will now be described with reference to **FIG. 11****.** Here, in **FIG. 11**, a reduction gear mechanism-shifting portion is omitted in its illustration. **FIG. 11** is a schematic block diagram of the ECU of the transfer case.
As shown in **FIG. 11****,** the ECU **12** serving as the control portion has a mode inputting portion **201** to which a signal is inputted through the operation switch **13,** a vehicle state-inputting portion **202** to which signals are inputted from the speed sensor **14,** the acceleration sensor **15.** the front wheel rotation sensor **16,** the rear wheel rotation sensor **17,** the throttle sensor **18,** the engine revolution sensor **19,** steering angle sensor **20,** and the like, respectively, and a torque determining portion **203** for determining a target torque which is distributed to the front drive shaft **6** in accordance with the signals inputted to the mode inputting portion **201** and the vehicle state-inputting portion **202,** respectively. In addition, the ECU **12** has a load arithmetically operating portion **204** for arithmetically operating a pressure which is applied to the pressure sensor **194** and which corresponds to the target torque determined in the torque determining portion **203,** a current arithmetically operating portion **205** for arithmetically operating a current which is caused to flow through the motor **181** so as to obtain the pressure arithmetically operated in the load arithmetically operating portion **204,** and a current outputting portion **206** for outputting a a signal relating to the current arithmetically operated in the current arithmetically operating portion **205** to the motor **181.** In this embodiment, the current outputting portion **206** controls the motor **181** in accordance with a pulse width modulation (PWM) system. The ECU **12** controls the motor **181** in accordance with the load detected in the load detecting portion **190.**

As shown in **FIG. 11****,** the ECU **12** has a memory portion **207** in which data on the target torque distributed to the front drive shaft **6** in each of the modes having the **2**WD mode, the **4**WD auto mode, and the **4**WD lock mode is stored. In the case of the **2**WD mode, the target torque is set so that the connection force of the multiple disc clutch **150** becomes minimum with the displacement of the output shaft **181a** of the motor **181** being fixed to zero. In the case of the **4**WD lock mode, the target torque is set so that the connection force of the multiple disc clutch **150** becomes maximum with the displacement of the output shaft **181**a of the motor **181** being fixed to zero. Also, in the case of the **4**WD auto mode, the target torque is set so that the connection force of the multiple disc clutch **150** change in accordance with the vehicle state. A map which is utilized in the case of the **4**WD auto mode, and in which the speed of the vehicle, the transverse acceleration, the ratio in rotation between the front wheels and the rear wheels, the degree of opening of the throttle, the number of revolutions of the engine, the angle of the steering, and the like are made to correspond to the target torque is stored in the memory portion **207.**

In addition, a map in which the pressure applied to the pressure sensor **194** is made to correspond to the targel torque is stored in the memory portion **207.** Here, if the proportional relationship is established between the target torque and the pressure, only a proportional coefficient relating thereto may be stored in the memory portion **207**. Moreover, data on the pressure which is applied to the pressure sensor **194** and which corresponds to the above-mentioned reference load L is stored in the memory portion **207.**

Moreover, the ECU **12** has a load inputting portion **208** to which the signal is inputted from the pressure sensor **194** in the load detecting portion **190**, a displacement inputting portion **209** to which the signal is inputted from the pulse sensor **184** of the motor **181**, and a feedback signal-generating portion **210** for generating a feedback signal in accordance with signals inputted thereto from the load inputting portion **208** and the displacement inputting portion **209,** respectively. In this embodiment, the current arithmetically operating portion **206** performs the arithmetic operations about three elements having a deviation between a pressure value outputted from the feedback signal-generating portion **210** and the pressure value inputted thereto as a target value from the load arithmetically operating portion **204**, an integration thereof, and a differential thereof. That is to say, the current arithmetically operating portion **206** performs proportional integral derivative (PID) control as the feedback control.

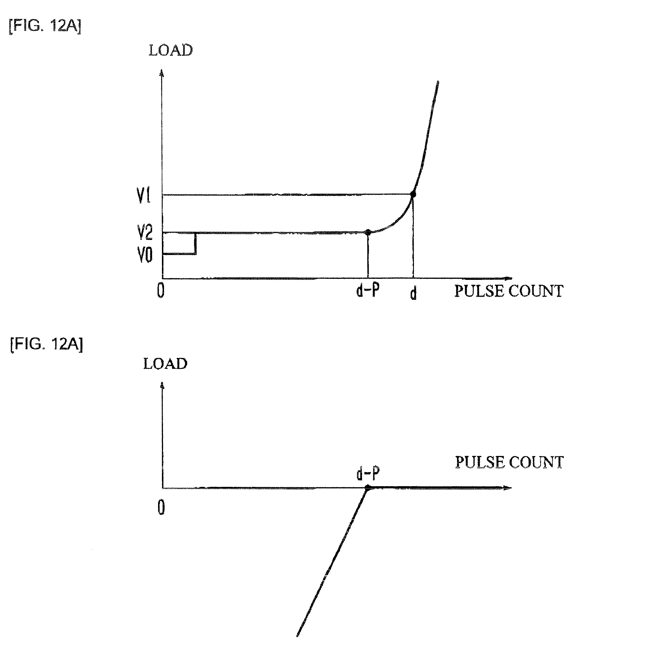

The feedback signal-generating portion **210** corrects a pressure value which is detected in the pressure sensor **194** and which is inputted thereto from the load inputting portion **208** in accordance with the rotation displacement the data on which is inputted thereto from the displacement inputting portion **209**, thereby generating the feedback signal. The generation of the feedback signal in the feedback signal-generating portion will be described hereinafter with reference to **FIGS. 12A** to **12C**.

**FIG. 12A** is a graphical representation showing a relationship between a pulse count in the pulse sensor of the motor, and the load detected in the load detecting portion.
As shown in **FIG. 12A**, the load detected in the load inputting portion **208** is approximately constant in the multiple disc clearance region B. B. In **FIG. 12A****,** the load when the output shaft **181**a of the motor **181** is located in a position of a starting point and a pulse count is set as zero is indicated as V**0**, the load when the pulse count is set as a reference value d in the torque control region C is indicated as V**1**, the load detected in the multiple disc clearance region B is indicated as V**2**, and the pulse count in the boundary between the multiple disc clearance region B and the torque control region C is indicated as a state (d - p) obtained by subtracting the pulse count from the reference value d by a predetermined value p.

**FIG. 12B** is a graphical representation showing a relationship between the pulse count in the pulse sensor and the load represented by a false signal generated in the feedback signal-generating portion.
As shown in **FIG. 12B,** the feedback signal-generating portion **210** generates the false signal a value on which changes with the rotation displacement in the multiple disc clearance region B in accordance with the rotation displacement of the output shaft **181**a. Here, in **FIG. 12B,** the case where the rotation displacement and the output value of the false signal show a linear relationship in the multiple disc clearance region B is exemplified. However, the rotation displacement and the output value of the false signal may show a non-linear relationship in the multiple disc clearance region **B**. In brief, the setting may be made so that the output value increases (decreases) along with an increase (decrease) in rotation displacement of the output shaft **181**a. Here, the output value of the false signal shows zero in the torque control region C.

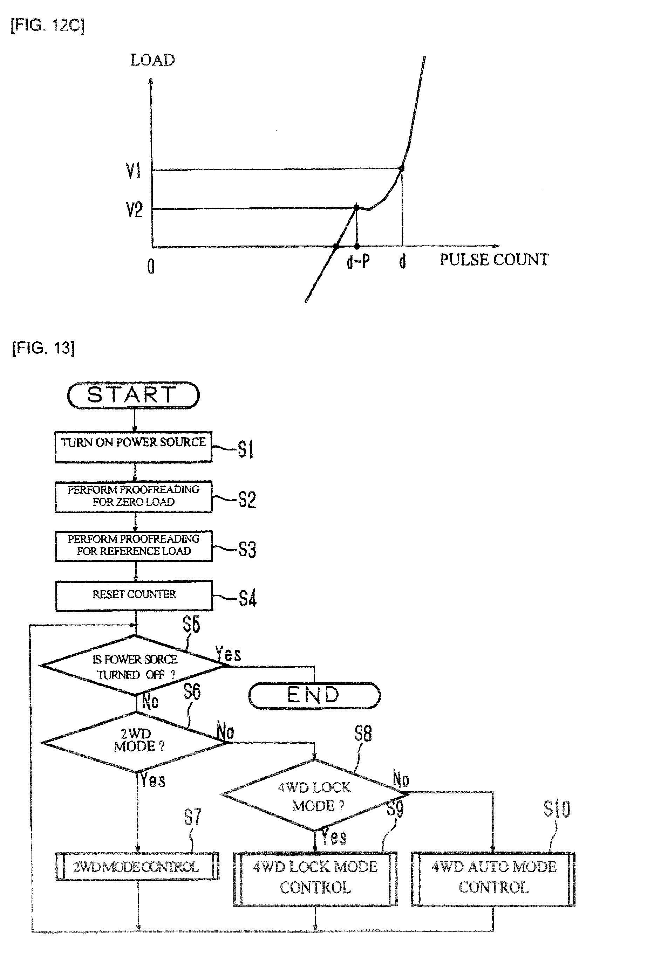

**FIG. 12C** is a graphical representation showing a relationship between the pulse count in the pulse sensor of the motor and the load represented by the feedback signal outputted from the feedback signal-generating portion.
The feedback signal-generating portion **210** generates the feedback signal shown in **FIG. 12C** by adding the load represented by the false signal and shown in **FIG. 12B** to the load shown in **FIG. 12A** and represented by the signal inputted thereto from the load inputting portion 208. As a result, as shown in **FIG. 12C****,** the feedback signal changes with the rotation displacement in the multiple disc clearance region **B** as well. That is to say, the ECU **12** controls the motor **181** in accordance with the load detected in the load detecting portion **190** with respect to a position where the movement member **160** contacts the multiple disc clutch **150**, and controls the motor **181** in accordance with the displacement detected in the pulse sensor **184** with respect to a position where the movement member **160** is separated apart from the multiple disc clutch **150**.

When a signal representing the load V**1** is inputted thereto from the load detecting portion **190** in the torque control region C, the feedback signal-generating portion **210**proofreads the count in the pulse sensor **184** of the motor **181** as the reference value d.
As a result, the rotation displacement of the output shaft **181**a detected in the pulse sensor **184** is adjusted for the load detected in the load detecting portion **190**. Also, when being subtracted from the state of the reference value d by the predetermined value p, the pulse count is located in the boundary position between the multiple disc clearance region B and the torque control region C. Hence, the boundary position recognized in the pulse sensor **184** is prevented from shifting from the boundary position recognized in the load detecting portion **190**.

In addition, as shown in **FIG. 11**, the ECU **12** has a load proofreading portion **211** for performing proofreading for the load detecting portion **190**. The load proofreading portion **211** performs the proofreading when the engine is started, for example, when a power source is turned on for the vehicle or when the engine is started. More specifically, the load proofreading portion **211** rotates the motor **181** in direction along which the movement member **160** is separated apart from the multiple disc clutch **150** so that the rotation displacement of the output shaft **181**a enters the sensor clearance region A. The load proofreading portion **211** produces a state in which no load is exerted on the load detecting portion **190** in the manner described above, and performs the proofreading with the value detected in this state as zero.

In addition, the load proofreading portion **211** performs the proofreading in the phase as well of the operation of the vehicle. More specifically, when the rotation displacement of the output shaft **181**a enters the multiple disc clearance region B in the phase of the control in the **4**WD auto mode, the load proofreading portion **211** performs the proofreading with the value detected at this time as the above-mentioned load V**2**. In general, in a sensor for outputting a signal representing a high or low voltage in correspondence to the large or small load, an output signal increases or decreases by a predetermined voltage value due to the dispersion in products, the change with passage of time, the temperature change, and the like. Thus, although the output signal is offset by the predetermined load due to the temperature change and the like even after the vehicle is started, the proofreading is performed in accordance with load V**2**, thereby realizing the more precise load detection.

Note that, the constituent elements of the ECU **12** are realized in an arbitrary combination of the hardware and the software by using a CPU, a memory, a program for realizing the individual constituent elements, a memory unit for storing therein the program, and an interface for external connection as the main constituent elements. Also, it is understood by those skilled in the art that there are various changes in its realization method and unit. **FIG. 11** shows the blocks not in the form of the hardware, but in the form of the functions.

Here, the control for the transfer case **5** made by the ECU **12** will now be described with reference to a flow chart shown in **FIG. 13****.**
When the power source is turned on for the vehicle (Step S**1**), the proofreading is performed for the state in which the load it the load detecting portion **190** is zero in the sensor clearance region A (Step S**2**). After that, the motor **181** is driven and the proofreading is then performed for the load V2 in the multiple disc clearance region B (Step S3). Moreover, the count in the pulse sensor **184** is proofread so that the load larger than the load V2 is detected in the load detecting portion **190** (Step S**4**). Thereafter, it is discriminated whether or not the power source for the vehicle is in the off state (Step S**5**). When it is discriminated that the power source is in the off state, the control is completed.

On the other hand, when it is discriminated that the power source for the vehicle is not in the off state (it is in the on state), subsequently, it is discriminated whether or not the mode the data on which is inputted through the operatiom switch **13** is the **2**WD mode (Step S**6**). When it is discriminated that the mode concerned is the 2WD mode, the **2**WD mode control is performed in which no connection force is generated in the multiple disc clutch **180** (Step S7). In the phase of the **2**WD mode control, the slidable contact of each of the plates **151** and **152** is preferably prevented from occurring in the multiple disc clutch **150**. Here, while not especially shown in **FIG. 13**, when the load changes so as to straddle the load V**2** in the phase of the proceeding to the **2**WD mode, at this time, the counter of the pulse sensor **184** is proofread. In addition, while not especially shown in **FIG. 13**, after the rotation displacement of the output shaft **181**a enters the multiple clearance region B, the load V**2** is proofread with a given period.

When it is discriminated in Step S**6** that the mode concerned is not the **2**WD mode, subsequently, it is discriminated whether or not the mode concerned is the **4**WD lock mode (Step S8). When it is discriminated that the mode concerned is the **4**WD lock mode, the **4**WD lock mode control is performed in which the connection force of the multiple disc clutch 150 becomes maximum (Step S**9**). Here, while not especially shown in **FIG. 7**, when the load changes so as to straddle the load V**2** in the phase of the proceeding to the **4**WD lock mode, at this time, the counter of the pulse sensor **134** is proofread.

When it is discriminated in Step S**8** that the mode concerned is not the **4**WD lock mode, the **4**WD auto mode is performed in which the pressure detected in the pressure sensor **194** gets a value corresponding to the connection force arithmetically operated in correspondence to the vehicle state (Step S**10**). Note that, while not especially shown in **FIG. 13**, when the load changes so as to straddle the load V**1** in the phase of the proceeding to the **4**WD lock mode, at this time, the counter of the pulse sensor **184** is proofread. In addition, while not especially shown in **FIG. 13****,** when the rotation displacement of the output shaft **181**a enters the multiple disc clearance region, the load V**2** is proofread. After completion of processing in Step S**7**, Step S**9** and Step S**10**, the operation returns back to the processing in Step S**5**, and the processing in Steps S**5** to S**10** is repeatedly executed until the power source for the vehicle becomes the off state.

According to the transfer case 5 constructed in the manner described above, since the load exerted on the second cam plate **173** of the transmission mechanism **170** for generating the connection force in the multiple disc clutch **150** is detected, the connection force of the multiple disc clutch **150** can be detected irrespective of the size errors and the assembly errors, the temperature changes and the like of the parts. Also, sine the feedback control is performed for the motor **181** in accordance with the load generated in the second cam plate **173**, the torque distributed to the front drive shaft **6** can be controlled as desired.

That is to say, the transfer case is prevented from being influenced by a change in expansion and contraction, an amount of elastic deformation, and the like of the pans due to the positional shifts and the temperature changes in parts caused by the size errors, the assembly errors and the like as in the conventional one for performing the feedback control for the motor by detecting the positions, the displacements and the like of the parts of the conversion mechanism. As a result, there is no possibility that when the target torque transmitted to the front drive shaft 6 is maximum, the output shaft of the motor is further rotated than is needed, thereby generating the excessive load in each of the parts disposed around the transmission mechanism **170** and the multiple disc clutch **150** as in the conventional transfer case. As a result, the strength, the durability and the like which are required for the parts disposed around the transmission mechanism **170** and the multiple disc clutch **150** can be reduced, and thus the simplification, the thin make and the like of the constructions of the parts can be realized. Consequently, the weight-lightening and the miniaturization of the parts disposed inside the transfer case **5** can be realized. Thus, the transfer case **5** is very advantageous for a practical application.

In addition, since the second cam plates **173** outputs the load which is linear with respect to the connection of the multiple disc clutch **150** to the load detecting portion **190**, the feedback control using the load can be simply and readily performed.

In addition, since the transmission mechanism **170** has a pair of cam plates **172** and **173**, and the ball **174** interposed between the cam plates **172** and **173**, the driving force of the motor **181** is continuously and smoothly transmitted to the movement member **160**. Therefore, the transfer case **5** is suitable for the precise control for the multiple disc clutch **150**.
In addition, since the speed is reduced by the pinion gear **171** and the first cam plate **172**, the torque generated in the motor **181** can be amplified and also the resulting torque can be transmitted to the first cam plate **172**. Moreover, the grooves **172**b and **173**b circumferentially change in their depths at the given rates, respectively, which results in that the axial displacement of the first cam plate **172** is linear with respect to the rotation displacement of the output shaft **181**a of the motor **181**. Therefore, the displacement control for the movement member **160** is simply and readily performed.

In addition, since the load exerted on the second cam plate **173** is converted into the pressure and the resulting pressure is detected, it is possible to use the relatively inexpensive pressure sensor **194** which is hardly influenced by the temperature. Thus, the precise control becomes possible while the manufacturing cost is suppressed.

in addition, since the second cam plate **173** moves to the position where it does not contact the load detecting portion **190**, this construction is convenience for the proofreading for the load detecting portion **190**. Also, since the load detecting portion **190** is proofread in the phase of start of the vehicle, it is possible to proofread the error for each product of the load detecting portion **190**. Also, even when the load detecting portion **190** is degraded in terms of passage of time, the proofreading can be exactly performed.

in addition, since in the phase as well or start of the vehicle, the proofreading for the load detecting portion **190** is performed in the multiple clearance region B, even when the output signal corresponding to the load detected in the load detecting portion **190** changes due to the temperature change or the like from the start of the vehicle, the precise load can be usually detected.

Also, since the motor **181** is controlled in accordance with the displacement of the output shaft **181**a of the motor **181** as well as in accordance with the load detected in the load detecting portion **190** in the multiple disc clearance region B, it is possible to precisely detect the position of the starting point where the connection force is generated in the multiple disc clutch **150**. In particular, since the feedback signal is made to change in the multiple disc clearance region B in accordance with the false signal in the phase of the feedback control, when the torque of the multiple disc clutch **150** changes from the torque control region C to the multiple disc clearance region B through the overshoot, it is possible to speedily return the torque back to the boundary position between the regions. Consequently, there is no hindrance even when the multiple disc clearance region B is relatively and largely ensured in which the detected load hardly changes. Thus, in the phase of the **2**WD mode, the slidable contact of each of the plates **151** and **152** in the multiple disc clutch **150** can be suppressed by sufficiently separating the movement member **160** apart from the multiple disc clutch **150**.

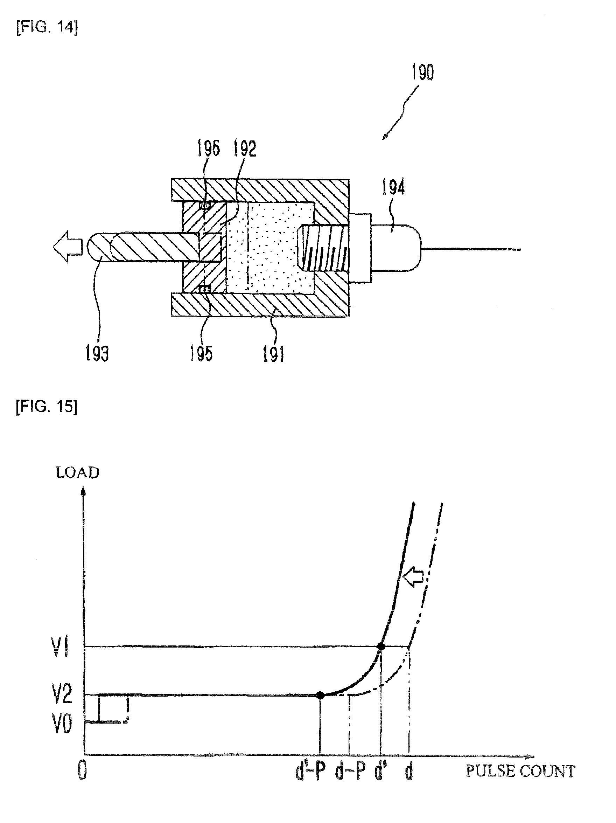

It should be noted that although the above-mentioned embodiment has shown the case of the method in which the proofreading for the load V**2** is performed in the multiple disc clearance region B, the proofreading after the start of the vehicle may also be performed by combining the above-mentioned method with any other suitable one or replacing the above-mentioned method with any other suitable one. For example, a temperature sensor may be provided as a temperature detecting portion in the vicinity of the load detecting portion **190** within the transfer case **5** and the proofreading for the load detecting portion **190** and the pulse sensor **184** may be performed in accordance with an input signal sent from the temperature sensor. That is to say, a load correcting portion may be provided which corrects the load detected in the load detecting portion in accordance with the temperature detected in the temperature detecting portion and a preset map. Or, a displacement correcting portion may be provided which corrects the displacement detected in the displacement detecting portion in accordance with the temperature detected in the temperature detecting portion and the preset map. Giving the oil pressure sensing system of the above-mentioned embodiment as an example, as shown in **FIG. 14**, the oil enclosed in the cylinder **191** may expand or contract due to a change in environmental temperature within the case **100**, so that the positions of the piston **192** and the rod **193** may shift. In this case, it is preferable that data on the detected temperature and a map of an amount of connected count are previously stored in the memory portion **207**, and whenever the detected load reaches the load V**1**, the reference value d of the pulse counter is proofread as a new reference value d' in accordance with the detected temperature and the map concerned. As a result, as shown in **FIG. 15**, the pulse count can be adjusted in accordance with the detected temperature. In this case, the reference value d of the pulse counter is preferably proofread even right after the start of the engine. The proofreading for the reference value d of the pulse counter may be performed through the averaging using the values in the phase of the past proofreading, or may be performed irrespective of the values in the phase of the past proofreading. Thus, the optimal method may be suitably selected in accordance with the specification or the like of the vehicle.

In addition, the above-mentioned embodiment has shown the case of the vehicle in which the mode concerned can be switched over to any one of the three modes having the **2** WD mode, the **4**WD auto mode and the **4**WD lock mode. However, the vehicle having at least the **4**WD auto mode is available. For example, the vehicle may also be available in which the mode concerned, for example, can be switched over to any one of the two modes having the **4**WD auto mode and the **4**WD lock mode.

Also, although the above-mentioned embodiment has shown the case where the displacement of the output shaft **181**a of the motor **181** is detected, for example, a displacement of the first cam plate **172** may also be detected.

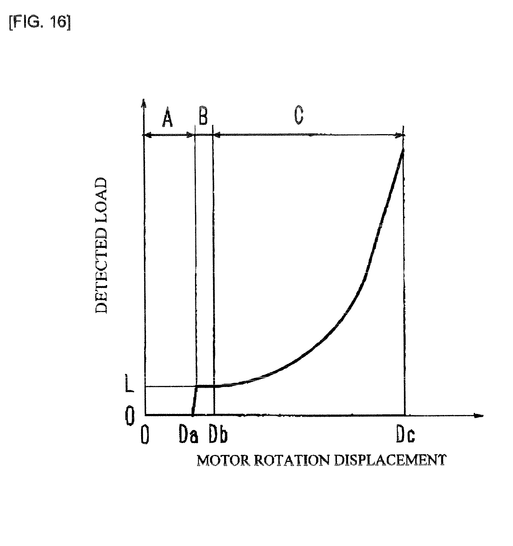

**FIG. 16** is a graphical representation showing a second embodiment of the present invention, and showing a relationship between a rotation displacement of an output shaft of a motor, and a load detected in a load detecting portion in a transfer installed in a vehicle in which two modes having a **4**WD auto mode and a **4**WD lock mode can be switched over to each other.

In the second embodiment, since it is not necessary to consider a sliding in each of the plates **151** and **152** of the multiple disc clutch **150**, a stroke of the movement member **160** which moves in the axial direction when it is separated apart from the multiple disc clutch **150** is set so as to be small and the multiple disc clearance region B of the output shaft **181**a is relatively small. In this manner, in case of the multiple disc clearance region B being relatively small, it does not become a position which is separated far from the torque controlling region C by an overshoot in the multiple disc clearance region B. Thus, a control which is a relatively good response is possible without the control based on the rotation displacement of the output shaft **181**a.

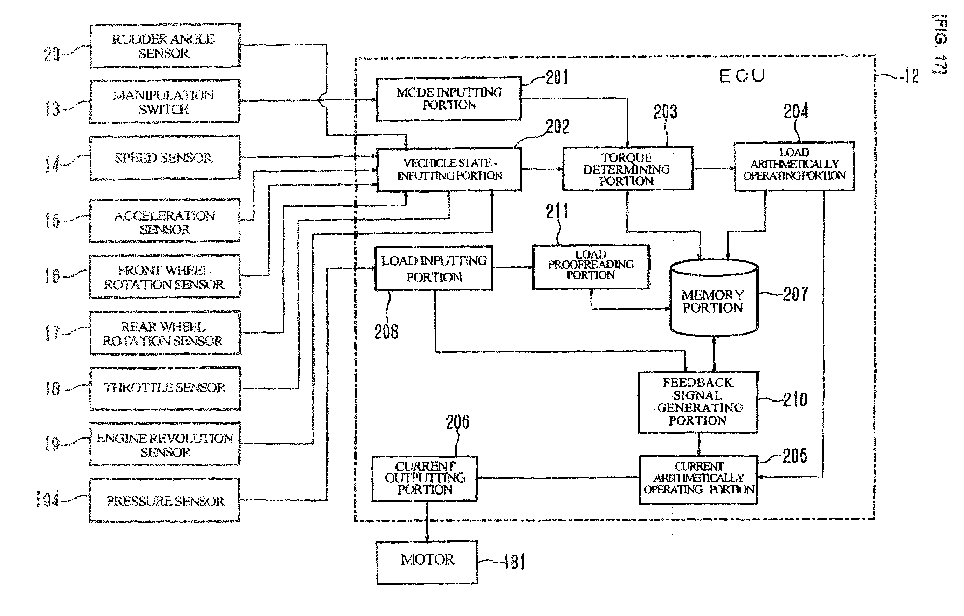

**FIG. 17** is a schematic block diagram of an ECU of the transfer vase.
In this embodiment, a pulse sensor is not provided on the motor output shaft **181**a, the feedback signal-generating portion **210** outputs a signal to the current arithmetically operating portion **205** without correcting an input signal from the current arithmetically operating portion **205** as shown **Fig. 6**. In addition, the transfer of the second embodiment is a same constitution as the first embodiment except no **2**WD mode, no pulse sensor and a smaller multiple disc clearance region.

According to the transfer case **5** constructed in the manner described above, since the load exerted on the second cam plate **173** of the transmission mechanism **170** for generating the connection force in the multiple disc clutch **150** is detected, the connection force of the multiple disc clutch **150** can be also detected irrespective of the size errors and the assembly errors, the temperature changes and the like of the parts. Also, sine the feedback control is performed for the motor **181** in accordance with the load generated in the second cam plate **173**, the torque distributed to the front drive shaft **6** can be controlled as desired. As a result, the strength, the durability and the like which are required for the parts disposed around the transmission mechanism **170** and the multiple disc clutch **150** can be reduced, and thus the simplification, the thin make and the like of the constructions of the parts can be realized. Consequently, the weight-lightening and the miniaturization of the parts disposed inside the transfer case **5** can be realized. Thus, the transfer case **5** is very advantageous for a practical application.

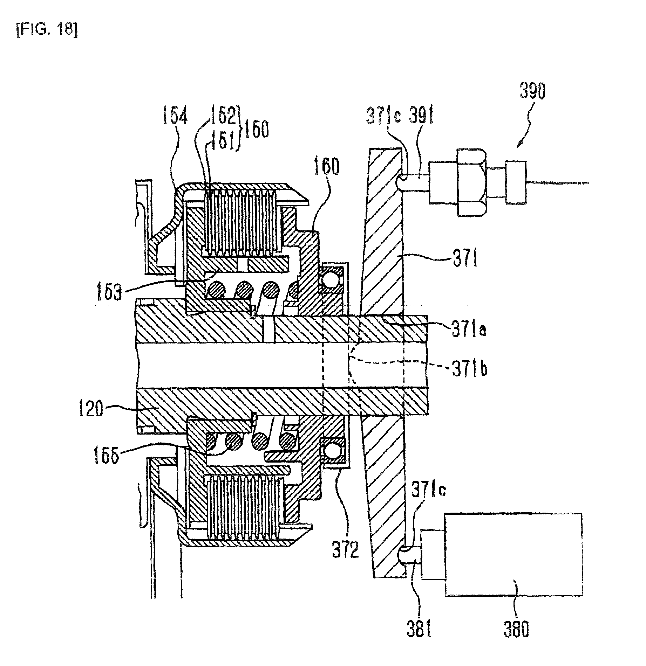

**FIG. 18** is a partial explanatory cross sectional view, of a transfer case, showing a third embodiment of the present invention.
As shown in **FIG. 18**, this transfer case **5** has a driving portion which is constituted by a linear actuator **380** and axial movement of the movement member **160** is realized by a lever member **371** which is moved by the linear actuator **380**. In this embodiment, the lever member **371** moves the movement member **160** in the axial direction.

The linear actuator **380** has a rod **381** which projects forward and moves the lever member **371** and the movement member **160** by moving the rod **381** in the axial direction. For example, the linear actuator **380** may use a solenoid or a fluid pressure. Furthermore, it may convert a rotational motion of a motor to a linear motion by a ball screw.

A load sensor **390** has a rod **391** which projects forward and output a signal related to a load to ECU **12**. This load sensor **390** uses, for example, a foil gage, a semiconductor gage, or the like and directly converts a load of the rod **391** to an electric signal.

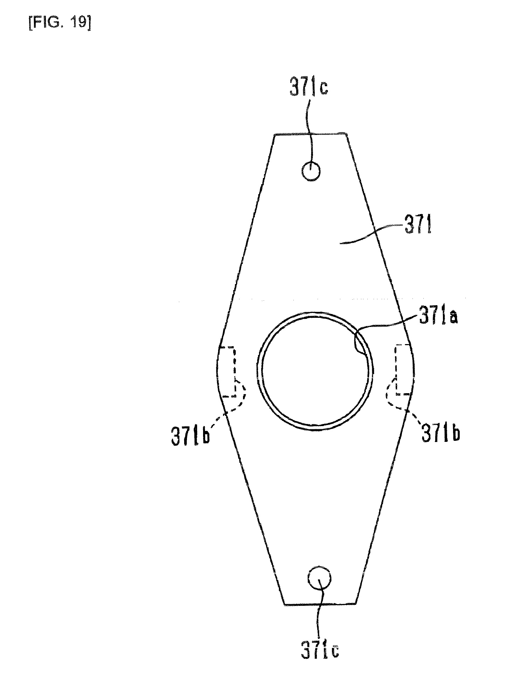

**FIG. 19** is a front view of a lever member.
As shown in **FIG. 19**, the lever member **371** is symmetrically-formed at a vertical and a horizontal direction in the figure and a center of the lever member **371** has a insertion hole **371**a which inserts the output shaft for rear wheels **120**. The lever member **371** contacts a thrust needle bearing **372** at a front surface and contacts the rod 381 of the linear actuator **380** and the rod **391** of the load sensor **390** at a rear face. The lever member **371** has a pair of projection portions **371**b which contact the thrust needle bearing **372** at the front surface and has a pair of reception portions **371**c which receive each of rods **381**, **391** at the rear surface.

In the third embodiment, a feedback control of the linear actuator **380** is performed by detecting an axial load on the lever member **371** at the load sensor **390**. In this manner, it is possible to detect the connection force of the multiple disc clutch **150** and the linear load by detecting the load of the member between the driving portion and the movement portion

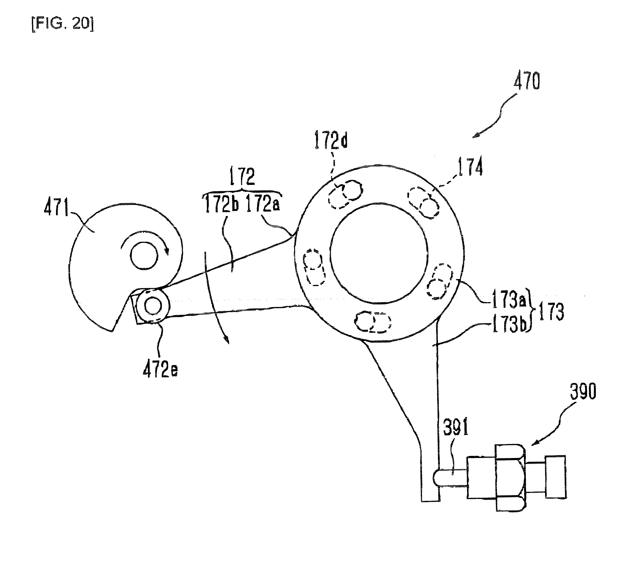

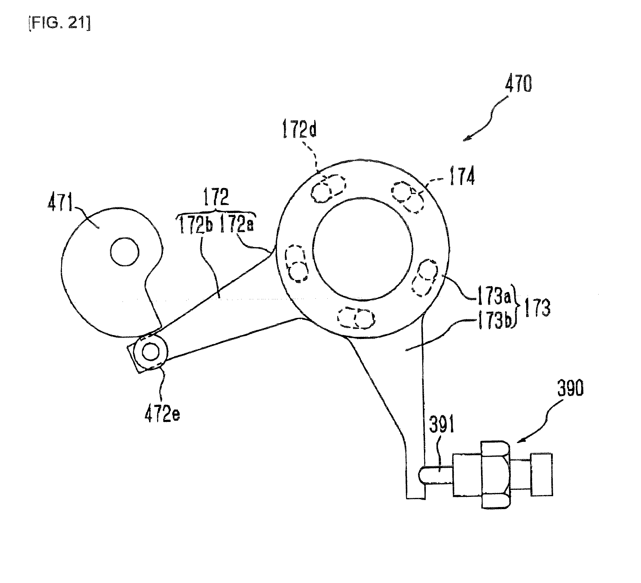

**FIG. 20** **and** **FIG 21** are a schematic explanatory front view, of a first cam plate and a second cam plate, and parts relating thereto, showing a fourth embodiment of the present invention. **FIG. 20** is showing a positional relationship among the parts in a multiple disc clearance region and **FIG. 21** is showing a positional relationship among the parts in a torque control region.

In the embodiment, a constitution of a transmission mechanism **470** is different from the first embodiment. As shown in **FIG. 20** and **FIG. 21**, the transmission mechanism **470** has the first cam plate **172** and the second cam plate **173** as well as the first embodiment, and a cam member **471** which is provided on the output shaft **182**a of the speed reducer **182**. A cam follower **472**e is provided at the driven portion **172**b of the first cam plate **172** which contacts slidably to the cam member **471** and a rotation position of the first cam plate **172** is determined by a radial measure of the cam member **471**. The cam member **471** is formed like a plate and the radial measure continuously changes in a circumferential direction. In this embodiment, a circumferential measure is nonlinear with respect to a rotation angular of the output shaft **181**a in the motor **181**.

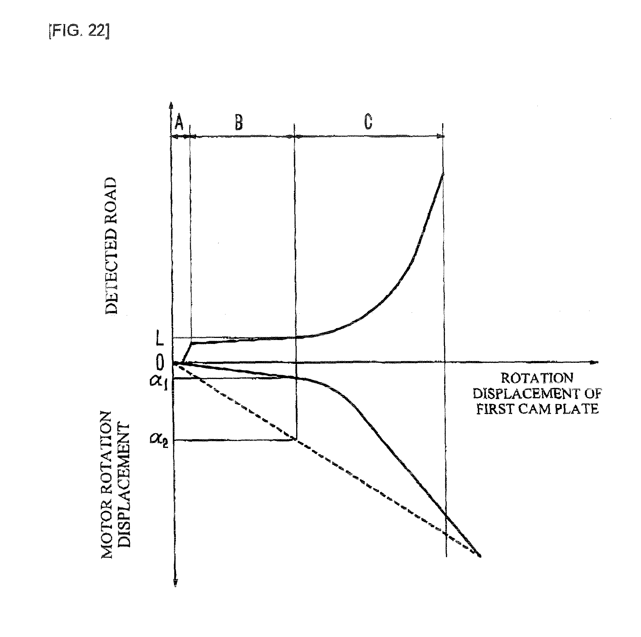

**FIG. 22** is a graphical representation in which its upper side is a graphical representation showing a relationship between a rotation displacement of the first cam plate, and a load detected in a load detecting portion, and its lower side is a graphical representation showing a relationship between the rotation displacement of the first cam plate, and a rotation displacement of an output shaft of a motor.

As shown in **FIG. 22****,** a shape of the cam member **471** is determined so as to increase an angular variation in the first cam plate **172** per an unit angular of the output shaft **181**a in the sensor clearance region A and the multiple disc clearance region B. Here, "increasing angular variation" means that the angular variation is bigger than the expected one in which the angular variation in the first cam plate **172** per the unit angular of the output shaft **181a** is constant. As shown in **FIG. 22****,** if the angular variation per the unit angular is constant, a rotation displacement of the output shaft **181a** is α**2**, but it is α**1** smaller than α**2** in this embodiment. In this embodiment, the angular variation in the first cam plate **172** per the unit angular of the output shaft **181a** also increases at a small load region in the torque control region C. As shown in **FIG 22**, the angular variation in the first cam plate **172** per the unit angular of the output shaft **181a** decreases at a big load region in the torque control region C.

According to the constitution in the manner described above, in the multiple disc clearance region B, since the angular variation in the first cam plate **172** per the unit angular of the output shaft **181a** is increased, a travel distance of the movement member **160** per the unit angular of the output shaft **181a** can be increased in the multiple disc clearance region B. In this manner, at the time of switching from the 2WD mode to the 4WD auto mode or the **4**wed lock mode, since it can rapidly generate a connection force in the multiple disc clutch **150**, the switching response of each of the modes can be quick.

Also, in the small load region in the torque control region C, since the angular variation in the first cam plate **172** per the unit angular of the output shaft **181a** is increased, a travel distance of the movement member **160** per the unit angular of the output shaft **181a** can be increased in said region. In this manner, in the small load region in the torque control region C, this region is often used at the time of 4WD auto mode, it is very advantageous for aa practical application since the switching response can be quick.

It should be noted that although the fourth embodiment has shown the case of the device in which the rotation angular of the output shaft **181a** of the motor **181** and the rotation angular of the first cam plate **172** are nonlinear, these may also be linear.

Also, it should be noted that although the first to the fourth embodiment have shown the case of the transfer case **5** in which the motive power is always transmitted to the rear wheel **11** side and the torque is distributed to the front wheel **9** side as necessary, the motive power may be always transmitted to the front wheel **9** side. Furthermore, although the control of the multiple disc clutch **150** for the transfer case **5** has shown, a motion transmission mechanism, of a differential gear or the like, may be accordingly modifiable. Also, it has shown the one mounted on the automobile vehicle, the one mounted on the vehicle of, for example, a railcar may be applicable. Furthermore, a working machine or the like may be applicable.

Also, for example, a roller is usable for the conversion mechanism instead of using the ball, and it stands to reason that other concrete detail structure or the like may be accordingly modifiable.

### INDUSTRIAL APPLICABILITY

The present invention may have applicability to a device which includes a multiple disc clutch for a power transmission or a control. For example, it may have applicability to a vehicle of an automobile, a railcar, or the like, various industrial machine, various working machine, or the like.

## Claims

1. A controller for a multiple disc clutch, including:
a multiple disc clutch having a plurality of clutch plates;
a movement member for contacting the multiple disc clutch to adjust a connection force of the multiple disc clutch, the movement member being movable in an arrangement direction of the plurality of clutch plates;
a driving portion for moving the movement member in the arrangement direction;
a transmission portion which transmits a driving force of the driving portion to the movement member, is subjected to a force in the arrangement direction in a phase of connection of the multiple disc clutch, and has a loaded member being subjected to a load linear with respect to the connection force of the multiple disc clutch in a predetermined direction;
a load detecting portion for detecting the load exerted on the loaded member in the predetermined direction; and
a control portion for controlling the driving portion in accordance with the load detected in the load detecting portion.

2. The controller for a multiple disc clutch according to claim 1, the driving portion is an actuator which generates a deriving force in a rotation direction, and wherein the transmission portion converts a motion of the actuator in rotation direction to a motion of the movement member in the arrangement direction, and wherein the loaded member is subjected to a load in a rotation direction and the arrangement direction in the phase of connection of the multiple disc clutch.

3. The controller for a multiple disc clutch according to claim 2, wherein the loaded member has a groove portion which is a changing depth and formed on the surface of the loaded member, and wherein the transmission portion has an intermediate member which is provided between the loaded member and the movement member and has a groove portion formed on the surface of the intermediate member, and a ball which is interposed between the groove portion on the loaded member and the groove portion on the intermediate member, and wherein the load detection portico detects a load of the loaded member in the rotation direction.

4. The controller for a multiple disc clutch according to claim 3, wherein the transmission portion has a pinion gear which is provided on an output shaft of the actuator and drives the intermediate member in a rotation direction.

5. The controller for a multiple disc clutch according to claim 3, wherein the transmission portion has a cam member which is provided on an output shaft of the actuator and drives the intermediate member in a rotation direction.

6. The controller for a multiple disc clutch according to claim 1, wherein the driving portion generates a driving force of the movement member in an axial direction, and wherein the transmission portion transmits a motion of the driving portion in an axial direction as a motion of the movement member in the arrangement direction, and wherein the loaded member is subjected to the force in the arrangement direction in a phase of connection of the multiple disc clutch, and wherein the load detection portion detects a load of the loaded member in the arrangement direction.

7. The controller for a multiple disc clutch according to claim 1, wherein the load detection portion has a load sensor.

8. The controller for a multiple disc clutch according to claim 1, wherein the load detection portion has a converting mechanism which converts the load of the loaded member to a fluid pressure and a pressure sensor which detects the fluid pressure.

9. The controller for a multiple disc clutch according to claim 1, wherein the controller includes a load proofreading portion which proofreads the load detection portion by moving the loaded member to a position in which a load detected by the load detection portion is zero.

10. The controller for a multiple disc clutch according to claim 9, wherein the controller includes a bias member biasing the movement member in the direction in which the movement member is separated apart from the multiple disc clutch, and wherein the load proofreading portion proofreads the load detection portion as the load detection portion is zero at a state in which the movement member is separated apart from the multiple disc clutch.

11. The controller for a multiple disc clutch according to claim 1, wherein the controller includes a temperature detecting portion which detects a temperature, a load correcting portion which corrects a detected load at the load detecting portion based on the temperature detected at the temperature detecting portion and a preset map.

12. A controller for a multiple disc clutch, including:
a multiple disc clutch having a plurality of clutch plates;
a movement member for contacting the multiple disc clutch to adjust a connection force of the multiple disc clutch, the movement member being movable in an arrangement direction of the plurality of clutch plates, the movement member being movable to a position where the movement member is separated apart from the multiple disc clutch;
a driving portion for moving the movement member in the arrangement direction;
a transmission portion which transmits a driving force of the driving portion to the movement member, is subjected to a force in the arrangement direction in a phase of connection of the multiple disc clutch, and has a loaded member being subjected to a load linear witch respect to the connection force of the multiple disc clutch in a predetermined direction;
a displacement detecting portion for detecting a displacement of a link member, the link member being moved by driving of the driving portion;
a load detecting portion for detecting a load exerted on the member on which a load is to be exerted in a predetermined direction; and
a control portion for controlling the driving portion in accordance with the load detected in the load detecting portion with respect to a position where the movement member contacts the multiple disc clutch, and controlling the driving portion in accordance with the displacement detected in the displacement detecting portion with respect to a position where the movement member is separated apart from the multiple disc clutch.

13. The controller for a multiple disc clutch according to claim 12, wherein the driving portion is an actuator which generates a driving force in a rotation direction, and wherein the transmission portion coverts a motion of the actuator in rotation direction to a motion of the movement member in the arrangement direction, and wherein the loaded member is subjected to a load in a rotation direction and the arrangement direction in the phase of connection of the multiple disc clutch.

14. The controller for a multiple disc clutch according to claim 13, wherein the loaded member has a groove portion which is a changing depth and formed on the surface of the loaded member, and wherein the transmission portion has an intermediate member which is provided between the loaded member and the movement member and has a groove portion formed on the surface of the intermediate member, and a ball which is interposed between the groove on the loaded and the groove portion on the intermediate member, and the load detection portion detects a load of the loaded member in the rotation direction.

15. The controller for a multiple disc clutch according to claim 14, wherein the transmission portion has a pinion gear which is provided on an output shaft of the actuator and drives the intermediate member in a rotation direction.

16. The controller for a multiple disc clutch according to claim 14, wherein the transmission portion has a cam member which is provided on an output shaft of the actuator and drives the intermediate member in a rotation direction.

17. The controller for a multiple disc clutch according to claim 12, wherein the driving portion generates a driving force of the movement member in an axial direction, and wherein the transmission portion transmits a motion of the driving portion in an axial direction as a motion of the movement member in the arrangement direction, and wherein the loaded member is subjected to the force in the arrangement direction in a phase of connection of the multiple disc clutch, and wherein the load detection portion detects a load of the loaded member in the direction.

18. The controller for a multiple disc clutch according to claim 12, wherein the load detection portion has a load sensor.

19. The controller for a multiple disc clutch according to claim 12, wherein the load detection portion has a converting mechanism which converts the load of the loaded member to a fluid pressure and a pressure sensor which detects the fluid pressure.

20. The controller for a multiple disc clutch according to claim 12, wherein the controller includes a load proofreading portion which proofread the load detection portion by moving the loaded member to a position in which a load detected by the load detection portion is zero.

21. The controller for a multiple disc clutch according to claim 20, wherein the controller includes a bias member biasing the movement member in the direction in which the movement member is separated apart from the multiple disc clutch, and wherein the load proofreading portion proofreads the load detection portion as the load detection portion is zero at a state in which the movement member is separated apart from the multiple disc clutch.

22. The controller for a multiple disc clutch according to claim 12, wherein the controller includes a temperature detecting portion which detects a temperature, a load correcting portion which corrects a detected load at the load detecting portion based on the temperature detected at the temperature detecting portion and a preset map.

23. The controller for a multiple disc clutch according to claim 12, wherein the controller includes a temperature detecting portion which detects a temperature, a load correcting portion which corrects a detected displacement at the displacement detecting portion based on the displacement detected at the displacement detecting portion and a preset map.

24. A transfer case, including:
an input shaft;
a first output shaft and a second shaft, a motive power of the input shaft being transmitted to each of the first output shaft and the second shaft; and
a controller for the multiple disc clutch according to claim 1, for controlling a distribution of the motive power transmitted from the first input shaft to each of the first output shaft and the second output shaft.

25. A transfer case, including:
an input shaft;
a first output shaft and a second shaft, a motive power of the input shaft being transmitted to each of the first output shaft and the second shaft; and
a controller for the multiple disc clutch according to claim 12, for controlling a distribution of the motive power transmitted from the first input shaft to each of the first output shaft and the second output shaft.
